# EUROPEAN PATENT SPECIFICATION

(11) **EP 1 917 095 B1**
(45) Date of publication and mention of the grant of the patent: **08.02.2012**
(21) Application number: 06781146.3
(22) Date of filing: 11.07.2006
(51) Int. Cl.: B01D 53/94, B01J 23/63, B01J 23/62, B01J 23/652

(54) **EXHAUST GAS PURIFYING CATALYST AND PROCESS FOR PRODUCING IT**
ABGASREINIGUNGSKATALYSATOR UND HERSTELLUNGSVERFAHREN DAFÜR
CATALYSEUR D'EPURATION DES GAZ D'ECHAPPEMENT ET PROCEDE PERMETTANT DE PRODUIRE CE CATALYSEUR

(30) Priority: 12.07.2005 JP 2005203034; 30.03.2006 JP 2006094408
(43) Date of publication of application: 07.05.2008
(73) Proprietor: TOYOTA JIDOSHA KABUSHIKI KAISHA, Toyota-shi, Aichi-ken, 471-8571 (JP)
(72) Inventor: MIURA, Masahide c/o TOYOTA JIDOSHA KABUSHIKI, 4718571 (JP)
(74) Representative: Duckworth, Timothy John
(86) International application number: PCT/JP2006/314121
(87) International publication number: WO 2007/007889

(56) References cited:
- EP-A- 1 350 554
- EP-A- 1 685 891
- EP-A1- 1 224 969
- EP-A1- 1 323 470
- EP-A2- 0 781 591
- WO-A-02/092224
- JP-A- 2001 046 870
- JP-A- 2003 290 658
- US-A- 4 581 343
- US-A- 5 607 892
- US-B1- 6 348 430

## Description

### TECHNICAL FIELD

The present invention relates to an exhaust gas purifying catalyst and a process for producing it.

### RELATED ART

The exhaust gas from an internal combustion engine, such as an automobile engine, contains nitrogen oxide (NOₓ), carbon monoxide (CO), hydrocarbon (HC) and the like. These substances can generally be purified by an exhaust gas purifying catalyst capable of oxidizing CO and HC and, at the same time, reducing NOₓ. As for representative exhaust gas purifying catalysts, three-way catalysts wherein a noble metal such as platinum (Pt), rhodium (Rh) and palladium (Pd) is supported on a porous metal oxide support such as γ-alumina are known.

The metal oxide support may be formed of various materials but, in order to obtain a large surface area, alumina (Al₂O₃) has been heretofore generally used. However, in recent years, for accelerating the purification of the exhaust gas by using the chemical properties of the support, it has been proposed to use various other materials such as ceria (CeO₂), zirconia (ZrO₂), titanium (TiO₂) and silica (SiO₂) in combination with, or not in combination with, alumina.

For example, in order to alleviate the fluctuation of oxygen concentration in the exhaust gas and thereby increase the exhaust gas purifying ability of the three-way catalyst, a material having an oxygen storage capacity (OSC) for storing oxygen when the oxygen concentration in the exhaust gas is high, and releasing oxygen when the oxygen concentration in the exhaust gas is low, is used as a support of the exhaust gas purifying catalyst. A representative material having OSC is ceria.

In order to allow for the efficient progress of oxidation of CO and HC and reduction of NOₓ by the activity of the three-way catalyst, the air-fuel ratio in the internal combustion engine must be the theoretical air-fuel ratio (stoichiometric air-fuel ratio). Therefore, an oxygen concentration in the vicinity of the theoretical air-fuel ratio is preferably maintained by alleviating a fluctuation in the oxygen concentration in the exhaust gas, so that the three-way catalyst can exert its exhaust gas purifying ability.

Furthermore, according to recent studies, it has been found that ceria not only has OSC but also, by virtue of its strong affinity for a noble metal, particularly platinum, can prevent particle growth (sintering) of the noble metal supported thereon.

In this way, ceria has preferred properties for use in an exhaust gas purifying catalyst, but sometimes fails in satisfying the heat resistance required in such usage. In order to solve this problem, a method for elevating the heat resistance the material by forming a solid solution of ceria and zirconia has been developed (see, for example, Japanese Unexamined Patent Publication (Kokai) No. 6-279027).

Further, for example, it is well-known that the combination of a zirconia-based support and rhodium supported thereon exerts a preferable catalyst performance. It is also well-known that an element such as alkaline earth metal and/or rare earth may be added to a zirconia-based support in order to improve the heat resistance thereof.

Meanwhile, in the purification of an exhaust gas, the catalyst is required to exhibit a high activity from a relatively low-temperature time such as when the engine is starting. Accordingly, many studies are being made to elevate the low-temperature activity of the catalyst. For example, Japanese Unexamined Patent Publication (Kokai) No. 2003-290658 (JPP'658) discloses an exhaust gas purifying catalyst wherein tungsten (W), molybdenum (Mo) or an oxide thereof is supported on an oxide support and a noble metal is further supported thereon. Such a constitution of JPP'658 bonds the oxide support and W or Mo through oxygen, and also strongly bonds W or Mo and the noble metal, whereby sintering of the noble metal is suppressed. Furthermore, in the Examples of JPP'658, with the use of a ceria-zirconia solid solution as the oxide support, tungsten (W) or molybdenum (Mo) is supported on the support and platinum is further supported thereon by a reduction-precipitation method.

Incidentally, as for the use of tungsten (W) in an exhaust gas purifying catalyst, its applications is being studied.

For example, Japanese Unexamined Patent Publication (Kokai) No. 2001-46870 (JPP'870) discloses using a composite oxide containing platinum and tungsten, in which the surface abundance ratio (Pt/W) of platinum and tungsten is from 0.01 to 0.5 (by number of atoms), by coating it on a catalyst support. In JPP'870, the thus-obtained catalyst provides particularly good properties with respect to the purification of a hydrocarbon component (HC).

Also, in Japanese Unexamined Patent Publication (Kokai) No. 2003-117398 (JPP'398), an exhaust gas purifying catalyst is obtained by loading tungsten carbide (WC) on a support and loading a transition metal thereon. JPP'398 states that the thus-obtained catalyst has the similar catalyst performance to that of a noble metal.

US 4,581,343 describes a catalyst comprising a support impregnated with (i) at least one platinum group precious metal, and with (ii) cerium base metal, or a combination of cerium and at least one other base metal, which is prepared by (1) impregnating a catalyst support with precursor compounds of said cerium base metal, or of said cerium base metal and of at least one other base metal, (2) activating said impregnated support, under a neutral or oxidizing atmosphere, at a temperature ranging from 120 to 800 °C, (3) impregnating said catalyst support with precursor compounds of said at least one platinum group precious metal, together with a delayed-action organic reducing agent, inactive under cold conditions, which effects reduction of said platinum group precious metal precursor compounds, but not of any cerium or other base metal precursor compounds, under the conditions of the step (4) below, and (4) activating said impregnated catalyst, also under a neutral or oxidizing atmosphere, at a temperature ranging from 300 to 800 °C.

EP-A-0781591 describes a purifying catalyst for the exhaust gas of an internal combustion engine of an automobile. The catalyst contains rhodium, palladium, a cerium compound, and a refractory inorganic oxide as catalytic components carried on a refractory carrier and comprises at least two catalyst layers, namely a catalyst layer containing the cerium compound and a catalyst layer containing palladium.

EP-A-1685891 describes a catalyst for catalytic reduction of nitrogen oxides contained in exhaust gases, which comprises: (A) a catalyst component A comprising (c) ceria or (d) praseodymium oxide or (e) an oxide and/or a composite oxide of at least two elements selected from the group consisting of cerium, zirconium, praseodymium, neodymium, terbium, samarium, gadolinium and lanthanum; (B) a catalyst component B comprising (d) a noble metal catalyst component selected from the group consisting of platinum, rhodium, palladium and oxides thereof and (e) a carrier; and (C) a catalyst component C comprising (f) a solid acid, and (g) a solid acid supporting an oxide of at least one element selected from the group consisting of vanadium, tungsten, molybdenum, copper, iron, cobalt, nickel and manganese.

US 6,348,430 describes a catalyst for treating the exhaust gas from an internal combustion engine, wherein the catalyst contains two catalytically active layers supported on a support. The first catalytically active layer contains a platinum group metal in close contact with all of the constituents of the first catalytically active layer, wherein the constituents of the first catalytically active layer include particulate aluminum oxide; particulate oxygen storage material, such as cerium oxide, cerium/zirconium and zirconium/cerium mixed oxides, and alkaline earth metal oxides. The second catalytically active layer, which is in direct contact with the exhaust gas, contains particulate aluminum oxide and at least one particulate oxygen storage material, such as cerium oxide, cerium/zirconium and zirconium/cerium mixed oxides. Rhodium is supported on part of the aluminum oxides in the second catalytically active layer or on the particulate oxygen storage material in the second catalytically active layer.

EP-A-1224969 describes a particulate matter combustion catalyst, which has a construction characterized by comprising an NO oxidation catalyst, wherein the catalyst component is carried on an acidic first carrier, and an NO₂ decomposition catalyst, wherein the catalyst component is carried on a second carrier.

EP-A-1350554 describes a catalyst for purifying exhaust gases comprising a support substrate, and a catalyst layer formed by loading, on a porous oxide, an active ingredient having reactability at least with said support substrate, and a noble metal, wherein said catalyst further comprises: a first oxide layer formed on a surface of said support substrate and composed mainly of an oxide which has a high reactability with said active ingredient, and a second oxide layer formed on a surface of said first oxide layer and composed mainly of an oxide which has a low readability with said active ingredient, and said catalyst layer is formed on a surface of said second oxide layer.

EP-A-1323470 describes an absorption reduction-type NOₓ purifying catalyst where NOₓ absorbent particles and support particles having supported thereon a catalyst component are mixed.

WO 02/092224 describes a catalyst for purification of diesel engine exhaust gas comprising a carrier of at least one sulfur-resistant refractory oxide and at least one catalytic metal, wherein at least one solid acid and/or sulfuric acid is carried on the carrier by adding at least one precursor of said solid acid and/or sulfuric acid during the preparation of the carrier, and preparation thereof.

US 4,492,769 describes a pollution control catalyst for a catalytic converter within the exhaust system of an internal combustion engine, which is prepared by (i) coating/impregnating a catalyst support with palladium and at least one base metal catalyst, (ii) activating the step (i) catalyst, (iii) next coating/impregnating the step (ii) activated catalyst with at least one platinum group precious metal other than palladium, or combination of palladium and at least one other platinum group precious metal, and (iv) then activating the step (iii) catalyst.

US 4,426,319 describes a catalyst which comprises (1) a support substrate, and (2) an active phase deposited thereon, said active phase (2) comprising (i) cerium, (ii) iron, (iii) at least one of the metals gallium and/or yttrium, (iv) at least one of the metals platinum and/or palladium, and (v) at least one of the metals iridium and/or rhodium.

As described above, the metal oxide used as a catalyst support is known to have an effect on sintering or the like of a noble metal supported thereon.

According to recent studies by the present inventors, the effect of preventing sintering of a noble metal is revealed to be at least partially attributable to the bonding through oxygen between the metal oxide support and the noble metal supported thereon. The bonding through oxygen between the metal oxide support and the noble metal is advantageous in preventing sintering of the noble metal, but tends to provide an oxidative property to the noble metal. In the case wherein the noble metal has an oxidative property, the catalyst performance is sometimes not fully exerted until the temperature is elevated and the noble metal satisfactorily recovers a property as a metal.

The invention provides an exhaust gas purifying catalyst, comprising: a metal oxide support constituted of an oxide of a first metal, wherein said first metal is contained in the support in an amount of 10 mol% or more based on the amount of all metal elements contained in the support; and a noble metal and an oxide of a second metal directly supported on said metal oxide support; wherein said first metal is a combination of cerium and zirconium; wherein said noble metal is selected from the group consisting of rhodium and platinum; wherein said second metal is selected from the group consisting of iron, gallium, silver, molybdenum, tungsten, thallium and bismuth.

Typically, the second metal is selected from the group consisting of gallium, silver, molybdenum, tungsten and bismuth. More preferably, the second metal is selected from the group consisting of gallium and tungsten.

In an embodiment of the invention, the noble metal is platinum. Preferably, the ceria-based support is a ceria-zirconia solid solution support.

Generally, the oxide of said second metal is present in an amount of 15 mass%, or less, based on the support.

Typically, the exhaust gas purifying catalyst is fired in an oxygen-containing oxidative atmosphere at 650 to 850 °C.

The invention also relates to a process of producing an exhaust gas purifying catalyst of the invention, wherein the process comprises: impregnating a metal oxide support constituted of an oxide of a first metal with a noble metal-containing solution, and then drying and firing it, and impregnating the metal oxide support with a second metal-containing solution, and then drying and firing it; and wherein said first metal is a combination of cerium and zirconium, and said first metal is contained in the support in an amount of 10 mol% or more based on the amount of all metal elements contained in the support; wherein said noble metal is selected from the group consisting of rhodium and platinum, wherein said second metal is selected from the group consisting of iron, gallium, silver, molybdenum, tungsten, thallium and bismuth.

Typically, the firing is performed in an oxygen-containing oxidative atmosphere at 650 to 850 °C after said noble metal and said second metal are supported on said metal oxide support.

Therefore, the present invention provides an exhaust gas purifying catalyst capable of suppressing the tendency of a metal oxide support to impart an oxidative property to a noble metal, and allowing a noble metal to fully exert the catalyst performance from a relatively low temperature, and a process for producing it.

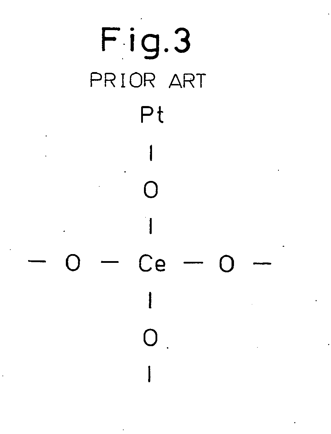

The bonding through oxygen between the metal oxide support and the noble metal is particularly prominent in the case of a combination of a ceria-based support and platinum supported thereon. It is known that this bonding contributes to the effect of preventing sintering of platinum by a ceria-based support. That is, the effect of preventing sintering of platinum supported on a ceria-based support is considered to be provided, as shown in Fig. 3, by the bonding through oxygen between ceria and platinum. The bonding through oxygen between ceria and platinum is advantageous in preventing sintering of platinum, but tends to provide an oxidative property to the platinum. As described above, this oxidative property sometimes decreases the catalyst performance of platinum at a low temperature such as during engine starting.

Therefore, the present invention provides an exhaust gas purifying catalyst, even if it is an exhaust gas purifying catalyst comprising the metal oxide support having platinum supported thereon, capable of suppressing the tendency of the metal oxide support to impart an oxidative property to platinum and allowing platinum to fully exert the catalyst performance even at a low temperature; and a process for producing the catalyst.

Further, it has also become known, recently, that an oxidative property of a noble metal, which is attributable to the bonding through oxygen between the metal oxide support and the noble metal, is prominent not only in the case of a combination of a ceria-based support and platinum supported thereon but also, generally, in the case of a support comprising an electron donor element such as an alkaline earth metal and/or a rare earth. That is, for example, it is known that rhodium, particularly, has an oxidative property when rhodium is supported on a zirconia-based support comprising an alkaline earth metal and/or a rare earth added thereto.

Therefore, the present invention provides an exhaust gas purifying catalyst, even if it is an exhaust gas purifying catalyst comprising the metal oxide support comprising alkaline earth metal added thereto and having rhodium supported thereon, capable of suppressing the tendency of the support to impart an oxidative property to rhodium and allowing rhodium to fully exert the catalyst performance even at a low temperature; and a process for producing the catalyst.

### BRIEF DESCRIPTION OF DRAWINGS

Fig. 1 is a view showing a model of the exhaust gas purifying catalyst in accordance with the present invention.
Fig. 2 is a model view for explaining the mechanism of the exhaust gas purifying catalyst in accordance with the present invention.
Fig. 3 is a model view for explaining the mechanism of the conventional exhaust gas purifying catalyst.

### DISCLOSURE OF THE INVENTION

The exhaust gas purifying catalyst of the present invention is an exhaust gas purifying catalyst comprising a metal oxide support constituted of an oxide of one or more first metals, and a noble metal and an oxide of a second metal directly supported thereon. The second metal has an electronegativity larger than that of the first metals, and is selected from the group consisting of metals excluding platinum-group metals and gold.

The one or more first metals constituting the metal oxide support means a metal other than so-called additive elements and, therefore, means a metal contained in the support in an amount of 10 mol% or more, particularly 20 mol% or more and more particularly 30 mol% or more, and still more particularly contained in the largest possible amount, based on the amount of all metal elements contained in the support. Incidentally, the "oxide of second metal "as used in the specification includes an oxide which is only partially oxidized.

According to the exhaust gas purifying catalyst of the present invention, the bonding through oxygen between the first metal constituting the metal oxide support, as well as elements added thereto, and the noble metal supported thereon can be alleviated by the oxide of the second metal having a relatively large electronegativity. This suppresses the tendency of the noble metal to have an oxidative property, and enables the noble metal to exhibit a metallic property and exert a high catalytic activity from a relatively low temperature.

In the exhaust gas purifying catalyst of the present invention, the first metal is a combination of cerium (1.12) and zirconium (1.33). In this paragraph, the numerical value in parenthesis indicates the electronegativity according to Pauling.

Also, the noble metal can be selected from the group consisting of rhodiulm and platinum.

The second metal is selected from the group consisting of iron (1.83), gallium (1.81), silver (1.93), molybdenum (2.16), tungsten (2.36), thallium (2.04) and bismuth (2.02). The numerical value in parenthesis indicates the electronegativity according to Pauling.

In this case, the second metal has a sufficiently large electronegativity, whereby the tendency that the bonding between the noble metal and the metal oxide support through oxygen imparts an oxidative property to the noble metal can be successfully suppressed.

More particularly, the second metal can be selected from the group consisting of gallium (Ga₂O₃, 1,740°C or more) and tungsten (WO₂, 1,500°C or more). The formula and numerical value in parenthesis indicate the oxide of the metal and the melting point of the oxide.

In this case, the oxide of the second metal has a high melting point, so that the heat resistance of the exhaust gas purifying catalyst of the present invention can be enhanced.

For example, the Pauling electronegativity of the second metal or semimetal can be 1.8 or more.

In this case, the second metal has a sufficiently large electronegativity, whereby the tendency that the bonding between the noble metal and the metal oxide support through oxygen imparts an oxidative property to the noble metal can be successfully suppressed.

In one embodiment of the exhaust gas purifying catalyst of the present invention, the first metals comprises at least two kinds of metals, and the ion radius of the second metal is not included in the range defined by the maximum value and minimum value of the ion radii of the at least two kinds of first metals.

According to this embodiment of the present invention, the ion radius of the first metals differs from the ion radius of the second metal, so that the solid dissolution between the oxide of the first metals and the oxide of the second metal can be suppressed, and therefore the heat resistance of the catalyst can be enhanced.

In one embodiment of the exhaust gas purifying catalyst of the present invention, the noble metal is platinum.

The cerium constituting the metal oxide support has a strong tendency of bonding with platinum supported on the support through oxygen and imparting an oxidative property to the platinum. Accordingly, in this embodiment of the present invention, the oxidative property of platinum can be suppressed and thereby, the catalyst performance of the exhaust gas purification catalyst can be particularly enhanced.

Also, in view of the OSC provided by a ceria-based support, as is known, it is important that a noble metal is directly supported on the ceria-based support and the noble metal catalyzes the passing of oxygen between the ceria-based support and the atmosphere. Accordingly, this embodiment of the present invention is preferred also in the point that platinum can be supported directly on the metal oxide support.

In the embodiment, the metal oxide support can be a ceria-zirconia solid solution support.

In this case, the heat resistance and OSC of the support can be enhanced.

In one embodiment of the exhaust gas purifying catalyst of the present invention, the support is a ceria-zirconia solid solution support, and the second metal is selected from the group consisting of gallium (0.76 Å), silver (1.29 Å), molybdenum (0.73 Å), tungsten (0.74 Å) and bismuth (1.17 A). The numerical value in parenthesis indicates the ion radius of the element.

According to this embodiment of the present invention, the support is a ceria-zirconia solid solution support, so that the heat resistance and OSC of a ceria-based support can be enhanced. Furthermore, the second metal has an ion radius out of the range from 0.86 Å (ion radius of zirconia) to 1.15 Å (ion radius of ceria), so that the oxide of the second metal can be prevented from forming a solid solution with the ceria-zirconia solid solution, that is, the durability of the exhaust gas purifying catalyst of the present invention can be enhanced.

In one embodiment of the present exhaust gas purifying catalyst, the noble metal is rhodium. The metal oxide support preferably comprises alkaline earth metal added thereto, more particularly an oxide of alkaline earth metal added thereto in amount of 0.1 to 5.0 mass% based on zirconia.

According to this embodiment of the present invention, the combination of metal oxide support and rhodium supported thereon can exert a preferable exhaust gas purifying ability, while preventing rhodium from having an oxidative property. More particularly, when an alkaline earth metal is added to zirconia in order to obtain a zirconia-based metal oxide support having an improved heat resistivity, it is possible to prevent the alkaline earth metal added to zirconia from providing an oxidative property to rhodium.

In one embodiment of the present exhaust gas purifying catalyst, the noble metal is rhodium, and the second metal is not in the form of an oxide having an oxidation number of 3.

Rhodium generally forms an oxide having an oxidation number of 3 (Rh₂O₃) when it is oxidized during the use thereof as an catalyst. Therefore, according to this embodiment of the present invention, as the second metal is not in the form of an oxide having an oxidation number of 3, i.e. not in the form of an oxide having formula M₂O₃ (M is second metal or semimetal, and 0 is oxygen), solid-dissolution of rhodium into an oxide of the second metal can be prevented.

In one embodiment of the exhaust gas purifying catalyst of the present invention, the oxide of the second metal is present in an amount of 15 mass% or less based on the support.

In one embodiment of the exhaust gas purifying catalyst of the present invention, the exhaust gas purifying catalyst of the present invention is fired in an oxygen-containing oxidative atmosphere at 650 to 850°C.

According to this embodiment of the present invention, the activity of the noble metal and the oxide of the second metal, which are supported on the metal oxide support, can be successfully brought out.

The process for producing an exhaust gas purifying catalyst of the present invention comprises impregnating a metal oxide support mainly constituted of an oxide of one or more first metals with a noble metal-containing solution, and then drying and firing it; impregnating the metal oxide support with a second metal-containing solution, and then drying and firing it. The second metal is selected from the group consisting of metals excluding platinum-group metals and gold, and has an electronegativity larger than that of the first metals.

In one embodiment of the process for producing an exhaust gas purifying catalyst of the present invention, the firing is performed in an oxygen-containing oxidative atmosphere at 650 to 850°C.

According to this embodiment of the present invention, the activity of the noble metal and the oxide of the second metal, which are supported on the metal oxide support, can be successfully brought out.

The present invention is described below by referring to the drawings, but these drawings conceptually show the exhaust gas purifying catalyst of the present invention and the present invention is not limited thereto by any means. In the following description, to facilitate understanding, a combination of a ceria-based support and platinum is used as the combination of a metal oxide support and a noble metal. However, the combination of a metal oxide support and a noble metal is not limited to this combination, and the present invention can be applied to an arbitrary combination of a metal oxide support and a noble metal.

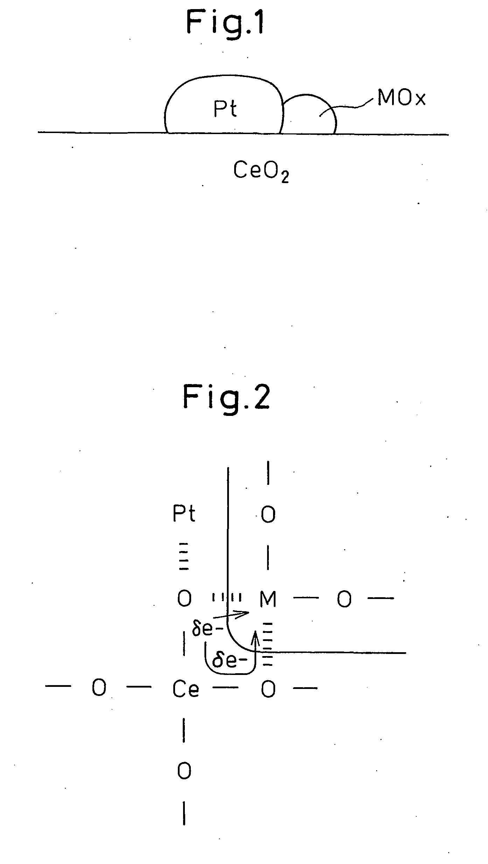

Fig. 1 is a view showing a model of the exhaust gas purifying catalyst of the present invention. In the exhaust gas purifying catalyst shown in Fig. 1, platinum as the noble metal and an oxide (MOₓ) of a metal (M) having an electronegativity larger than that of cerium (Ce) constituting a metal oxide support are supported directly on ceria (CeO₂) as the metal oxide support.

As described above, a certain kind of bonding through oxygen is formed between the metal oxide support and the noble metal supported directly thereon and, as a result, the noble metal has, at least partially, an oxide property. Fig. 3 shows the bonding through oxygen (0), with respect to cerium (Ce) constituting ceria as the metal oxide.support and platinum (Pt) as the noble metal.

In the exhaust gas purifying catalyst of the present invention, an oxide (MOₓ) of a second metal (M) having a relatively large electronegativity is directly supported on a support (CeO₂), whereby, as shown in Fig. 2, a certain kind of bonding is formed between the second metal (M) and oxygen (O) constituting the support. As the second metal (M) has a relatively large electronegativity, the second metal or semimetal (M) withdraws, through this bonding, an electron of the oxygen (O) bonded to cerium (Ce). In the exhaust gas purifying catalyst of the present invention, by virtue of giving such an effect on the bonding through oxygen between cerium constituting the metal oxide support and platinum, the tendency of cerium to impart an oxide property to platinum through oxygen can be suppressed.

The exhaust gas purifying catalyst of the present invention can be produced by the process of the present invention.

As for the noble metal-containing solution and the second metal-containing solution used in this process, a salt solution such as nitrate solution of these metals or semimetals may be used. The drying of the metal oxide support impregnated with the noble metal-containing solution and the second metal containing solution may be performed at a temperature of 120°C and until the water is substantially removed. Furthermore, the firing of the metal oxide support obtained after such drying may be performed in air at a temperature generally employed for the synthesis of a metal oxide, for example, at a temperature of 500 to 1,100°C.

The firing may be performed particularly in an oxygen-containing oxidative atmosphere at 650 to 850°C, more particularly from 700 to 800°C, that is, in a highly oxidizing atmosphere enough to oxidize the noble metal and second metal supported on the metal oxide support. The oxygen-containing oxidative atmosphere includes a nitrogen atmosphere containing 10 vol% or more of oxygen and, particularly, is air. Also, this firing in an oxygen-containing oxidative atmosphere may be performed, for example, for from 1 to 5 hours, particularly from 2 to 4 hours.

In the production process of the exhaust gas catalyst, either one of the noble metal and the oxide of a second metal may be first supported, or these may be simultaneously supported.

The present invention is described below based on Examples, but the present invention is not limited thereto.

### EXAMPLES

### [Example 1]

A ceria-zirconia solid solution powder (Ce:Zr (molar ratio) = 1:1, specific surface area: 70 m²/g) as a catalyst support was dispersed in distilled water in a 6-fold amount by mass, and a dinitrodiammine platinum solution was added thereto in an amount of giving a platinum concentration of 1.0 mass% based on the support. The obtained solution was mixed for 1 hour and, after drying the water content of this solution at 120°C, the residue was fired at 500°C for 2 hours and then pulverized in a mortar to obtain a platinum-supported support powder.

The thus-obtained platinum-supported support powder was dispersed in an aqueous iron(III) nitrate nonahydrate solution in a 6-fold amount by mass, and the obtained solution was mixed for 1 hour. The iron salt solution contained iron ion in an amount such that the finally obtained catalyst could contain 10 mass% of an iron oxide (Fe₂O₃) based on the support. Thereafter, the water content of this solution was removed at 120°C, and the residue was fired at 500°C for 2 hours to obtain the exhaust gas purifying catalyst of Example 1.

### [Examples 2 to 7]

The exhaust gas purifying catalysts of Examples 2 to 7 were obtained in the same manner as in Example 1 except for using, in place of iron(III) nitrate nonahydrate, gallium(III) nitrate, silver nitrate, diammonium molybdate, ammonium tungstate pentahydrate, thallium nitrate and bismuth(III) nitrate pentahydrate, respectively, so that the finally obtained catalyst could contain, based on the support, 10 mass% of gallium oxide (Ga₂O₃), silver oxide (AgO), molybdenum oxide (MoO₂), tungsten oxide (WO₂), thallium oxide (Tl₂O₃) or bismuth oxide (Bi₂O₃).

### [Comparative Example 1]

The exhaust gas purifying catalyst of Comparative Example 1 was obtained in the same manner as in Example 1 except for not loading iron oxide (Fe₂O₃). That is, the exhaust gas purifying catalyst of Comparative Example 1 is an exhaust gas purifying catalyst wherein platinum is supported on a ceria-zirconia solid solution powder as the catalyst support.

### [Comparative Example 2]

The exhaust gas purifying catalyst of Comparative Example 2 was obtained in the same manner as in Example 1 except for using yttrium nitrate in place of iron(III) nitrate nonahydrate so that the finally obtained catalyst could contain 10 mass% of yttrium oxide (Y₂O₃) based on the support. The Pauling electronegativity of the yttrium used here is 1.22.

The metal salts used in the production of catalysts of Examples 1 to 7 and Comparative Examples 1 and 2, and the constitutions of the obtained catalysts are shown together in Table 1 below. As described above, in all catalysts, the amount of platinum (Pt) supported was 1.0 mass% based on the support, and the amount of the metal oxide such as iron oxide supported was 10 mass% based on the support.

**Table 1: Catalysts of Examples 1 to 7, and Comparative Examples 1 and 2**

| | Metal Salt Used | Constitution of Catalyst |
|---|---|---|
| Example 1 | Fe(NO₃)₃·9H₂O | Fe₂O₃/Pt/(Zr,Ce)O₂ |
| Example 2 | Ga(NO₃)₃·nH₂O | Ga₂O₃/Pt/(Zr,Ce)O₂ |
| Example 3 | AgNO₃ | AgO/Pt/(Zr,Ce)O₂ |
| Example 4 | (NH₄)₂Mo₂O₇ | MoO₂/Pt/(Zr,Ce)O₂ |
| Example 5 | 5(NH₄)₂·12WO₂·5H₂O | WO₂/Pt/(Zr,Ce)O₂ |
| Example 6 | TlNO₃ | Tl₂O₃/Pt/(Zr,Ce)O₂ |
| Example 7 | Bi(NO₃)₃·5h₂O | Bi₂O₃/Pt/(Zr,Ce)O₂ |
| Comparative Example 1 | - | Pt/(Zr,Ce)O₂ |
| Comparative Example 2 | Y(NO₃)₃·6H₂O | Y₂O₃/Pt/(Zr,Ce)O₂ |

### [Evaluation 1 of Initial Catalyst Performance]

100 Parts by mass of each of the catalysts of Examples 1 to 7 and Comparative Examples 1 and 2 was mixed with ion exchanged water and alumina sol in an amount of 10 parts by mass in terms of solids to have a solid content of 47 mass%, and the obtained mixture was mixed in a ball mill for 24 hours to prepare a slurry. A ceramic honeycomb (35 ml) was naturally immersed in the thus-obtained slurry and, after blowing off excess slurry, dried in an electric furnace at 120°C for 1 hour, whereby each of the catalysts of Examples 1 to 7 and Comparative Examples 1 and 2 was coated on a ceramic honeycomb. The amount of platinum in the catalyst coated on a ceramic honeycomb was adjusted to 1 g/L.

Through the ceramic honeycomb, having the catalyst of Examples 1 to 7 and Comparative Examples 1 and 2 coated thereon, a rich gas and a lean gas (30 liter/min) each having a composition shown in Table 2 were passed at a temperature of 400°C with change over between these gases every one second, so that the ceramic honeycomb could be warmed up with the gases. The purification percentage of hydrocarbon (HC purification percentage) during warming up of the ceramic honeycomb was determined from the inlet gas composition into the ceramic honeycomb and the outlet gas composition from the ceramic honeycomb, and the time until the HC purification percentage reached 50% was examined. The results are shown in Table 3.

**Table 2: Composition of Gas for Evaluation**

| | N₂ | CO₂ | NO | CO | C₃H₆ | H₂ | O₂ | H₂O |
|---|---|---|---|---|---|---|---|---|
| | (%) | (%) | (ppm) | (%) | (ppmC) | (%) | (%) | (%) |
| Rich Gas | balance | 10 | 2200 | 2.80 | 2500 | 0.27 | 0.77 | 10 |
| Lean Gas | balance | 10 | 2200 | 0.81 | 2500 | 0 | 1.7 | 10 |

**Table 3: Evaluation 1 of Initial Catalyst Performance**

| | Constitution of Catalyst | Electro-negativity | Time (sec) Until Reaching 50% Purification |
|---|---|---|---|
| Example 1 | Fe₂O₃/-Pt/(Zr,Ce)O₂ | Fe (1.83) | 32 |
| Example 2 | Ga₂O₃/Pt/(Zr,Ce)O₂ | Ga (1.81) | 31 |
| Example 3 | AgO/Pt/(Zr,Ce)O₂ | Ag (1.93) | 31 |
| Example 4 | Mo₂O₃/Pt/(Zr,Ce)O₂ | Mo (2.16) | 26 |
| Example 5 | WO₂/Pt/(Zr,Ce)O₂ | W (2.36) | 27 |
| Example 6 | Tl₂O₃/Pt/(Zr,Ce)O₂ | T1 (2.04) | 32 |
| Example 7 | Bi₂O₃/Pt/(Zr,Ce)O₂ | Bi (2.02) | 29 |
| Comparative Example 1 | Pt/(Zr,Ce)O₂ | - | 43 |
| Comparative Example 2 | Y₂O₃/Pt/(Zr,Ce)O₂ | Y (1.22) | 45 |

As can be understood from Table 3, in the case of the catalysts of Examples 1 to 7 of the present invention wherein an oxide of a metal having an electronegativity larger than those of cerium (electronegativity: 1.12) and zirconium (electronegativity: 1.33) constituting a ceria-zirconia solid solution is supported on a ceria-zirconia solid solution as the catalyst support, a 50% HC purification percentage is reached in a relatively short time as compared with the catalyst of Comparative Example 1 wherein such a metal oxide is not supported, and the catalyst of Comparative Example 2 wherein an oxide of yttrium having a small electronegativity is supported. This reveals that the catalysts of Examples 1 to 7 of the present invention provide high catalytic activity from a relatively low temperature as compared with the catalysts of Comparative Examples 1 and 2.

### [Evaluation 1 of Catalyst Performance after Endurance Test]

In order to evaluate the performance of the catalyst after an endurance test, the catalysts of Examples 1 to 7 and Comparative Examples 1 and 2 were each coated on a ceramic honeycomb as in Evaluation 1 of Initial Catalyst Performance above, and then the ceramic honeycomb having the catalyst coated thereon was fired in a electric furnace at 1,000°C for 3 hours. Thereafter, the time until the HC purification percentage reached 50% was examined in the same manner as in Evaluation of Initial Catalyst Performance above. The results are shown in Table 4.

**Table 4: Evaluation 1 of Catalyst Performance After Endurance Test**

| | Constitution of Catalyst | Ion Radius | Melting Point | Time (sec) Until Reaching 50% Purification |
|---|---|---|---|---|
| Example 1 | Fe₂O₃/Pt/(Zr,Ce)O₂ | Fe (0.92 Å) | Fe₂O₃ (1565°C) | 55 |
| Example 2 | Ga₂O₃/Pt/(Zr,Ce)O₂ | Ga (0.76 Å) | Ga₂O₃ (1740°C or more) | 37 |
| Example 3 | AgO/Pt/(Zr,Ce)O₂ | Ag (1.29 Å) | AgO* | 45 |
| Example 4 | Mo₂O₃/Pt/(Zr,Ce)O₂ | Mo (0.73 Å) | Mo₂O₃ (795°C) | 47 |
| Example 5 | WO₂/Pt/(Zr,Ce)O₂ | W (0.74 Å) | WO₂ (1500°C or more) | 35 |
| Example 6 | Tl₂O₃/Pt/(Zr,Ce)O₂ | Tl (1.03 Å) | Ti₂O₃ (717°C) | 57 |
| Example 7 | Bi₂O₃/Pt/(Zr,Ce)O₂ | Bi (1.17 Å) | Bi₂O₃ (820°C) | 49 |
| Comparative Example 1 | Pt/(Zr,Ce)O₂ | - | - | 56 |

| | | | | |
|---|---|---|---|---|
| *Started decomposing into silver and oxygen at 100°C or more. | | | | |

As understood from Table 4, in the case of the catalysts of Examples 1 to 7 wherein a metal oxide having an electronegativity larger than those of cerium and zirconium constituting a ceria-zirconia solid solution is supported on a ceria-zirconia solid solution as the catalyst support, a 50% HC purification percentage is reached in the same or relatively short time as compared with the catalyst of Comparative Example 1 wherein such a metal oxide is not supported. This reveals that the catalysts of Examples 1 to 7 of the present invention provide high catalytic activity from the similar temperature or a relatively low temperature as compared with the catalyst of Comparative Example 1.

Among the catalysts of Examples 1 to 7, a particularly excellent effect is provided by the catalysts of Examples 2 to 5 and 7 wherein a metal having an ion radius out of the range from 0.86 Å (ion radius of zirconia) to 1.16 Å (ion radius of ceria) is used as the metal having a relatively large electronegativity.

Furthermore, among these catalysts of Examples 2 to 5 and 7, a particularly excellent effect is provided by the catalysts of Examples 2 and 5 wherein gallium or tungsten of which oxide has a melting point of 1,000°C or more is used as the metal or semimetal having a relatively large electronegativity.

### [Evaluation 2 of Catalyst Performance after Endurance]

The exhaust gas purifying catalysts of Examples 8 to 11 were obtained in the same manner as in Example 5 except for changing the amount of tungsten oxide supported to 1, 5, 15 and 20 mass%, respectively. The catalyst performance after endurance of these exhaust gas purifying catalysts was evaluated in the same manner as in Evaluation 1 of Catalyst Performance after Endurance. The results are shown in Table 5.

**Table 5: Evaluation 2 of Catalyst Performance After Endurance Test**

| | Amount of WO₂ Supported (mass%) | Time (sec) Until Reaching 50% Purification |
|---|---|---|
| Example 8 | 1 | 53 |
| Example 9 | 5 | 36 |
| Example 5 | 10 | 35 |
| Example 10 | 15 | 33 |
| Example 11 | 20 | 47 |
| Comparative Example 1 | - | 56 |

As can be understood from Table 5, when tungsten is used as the metal having a relatively large electronegativity, a good exhaust gas purifying performance is provided in all cases wherein the amount supported is from 1 to 20 mass% and, particularly, in the cases wherein the amount supported is from 5 to 15 mass%.

### [Evaluation 3 of Catalyst Performance after Endurance Test]

The exhaust gas purifying catalysts of Examples 12 and 13 and Comparative Example 3 were obtained in the same manner as in Examples 2 and 5 and Comparative Example 1 except for performing the firing in air at 600°C, 700°C, 800°C and 900°C for 3 hours. The catalyst performance after endurance of these exhaust gas purifying catalysts was evaluated in the same manner as in Evaluation 1 of Catalyst Performance after Endurance. The results are shown in Table 6.

**Table 6: Evaluation 3 of Catalyst Performance after Endurance Test**

| | Constitution of Catalyst | Time (sec) Until Reaching 50% Purification | | | |
|---|---|---|---|---|---|
| | | Firing Temperature | | | |
| | | 600°C | 700°C | 800°C | 900°C |
| Example 12 | Ga₂O₃/Pt/(Zr,Ce)O₂ | 37 | 31 | 26 | 42 |
| Example 13 | WO₂/Pt/(Zr,Ce)O₂ | 33 | 24 | 21 | 35 |
| Comparative Example 3 | Pt/(Zr,Ce)O₂ | 42 | 38 | 36 | 40 |

As can be understood from Table 6, in the case of the exhaust gas purifying catalysts of Examples 12 and 13, the exhaust gas purifying performance is apparently enhanced when the firing temperature is 700°C and 800°C, as compared with that when the firing temperature is 600°C and 900°C. Incidentally, it is seen that in the case of the exhaust gas purifying catalyst of Comparative Example 3, the effect of the firing temperature on the exhaust gas purifying performance is relatively small.

### [Example 8]

A ceria-added zirconia powder (ceria amount added: 2 mass%, specific surface area: 98 m²/g) as a catalyst support was dispersed in distilled water in a 6-fold amount by mass, and a rhodium nitrate solution (2.7 mass%) was added thereto in an amount of giving a rhodium concentration of 0.5 mass% based on the support. The obtained solution was mixed for 1 hour and, after removing the water content of this solution at 120°C, the residue was fired at 500°C for 2 hours and then pulverized in a mortar to obtain a rhodium-supported support powder.

The thus-obtained rhodium-supported support powder was dispersed in an aqueous iron(III) nitrate nonahydrate solution in a 6-fold amount by mass, and the obtained solution was mixed for 1 hour. The iron salt solution contained iron ion in an amount such that the finally obtained catalyst could have iron (Fe) to rhodium (Rh) ratio (Fe/Rh) of 2.0. Thereafter, the water content of this solution was removed at 120°C, and the residue was fired at 500°C for 2 hours to obtain the exhaust gas purifying catalyst of Example 8.

### [Examples 9 to 14]

The exhaust gas purifying catalysts of Examples 9 to 14 were obtained in the same manner as in Example 8 except for using, in place of iron(III) nitrate nonahydrate, the salts used in Examples 2 to 7, respectively, so that the finally obtained catalyst could contain gallium (Ga), silver (Ag), molybdenum (Mo), tungsten (W), thallium (Tl) or bismuth (Bi) to rhodium (Rh) ratio of 2.0.

### [Comparative Example 3]

The exhaust gas purifying catalyst of Comparative Example 3 was obtained in the same manner as in Example 8 except for not loading iron oxide (Fe₂O₃). That is, the exhaust gas purifying catalyst of Comparative Example 3 is an exhaust gas purifying catalyst wherein rhodium is supported on a ceria-added zirconia powder as the catalyst support.

### [Comparative Example 4]

The exhaust gas purifying catalyst of Comparative Example 4 was obtained in the same manner as in Example 8 except for using yttrium nitrate in place of iron(III) nitrate nonahydrate so that the finally obtained catalyst could have yttrium (Y) to rhodium (Rh) ratio (Y/Rh) of 2.0. The Pauling electronegativity of the yttrium used here is 1.22.

The metal salts used in the production of catalysts of Examples 8 to 14 and Comparative Examples 3 and 4, and the constitutions of the obtained catalysts are shown together in Table 7 below. As described above, in all catalysts, the amount of rhodium (Rh) supported was 0.5 mass% based on the support, and the amount of the metal oxide such as iron oxide supported was the amount wherein the ratio of the metal (M) constituting the metal oxide to rhodium (Rh), i.e. M/Rh ratio, of 2.0.

**Table 7: Catalysts of Examples 8 to 14 and Comparative Examples 3 and 4**

| | Metal Salt Used | Constitution of Catalyst |
|---|---|---|
| Example 8 | Fe(NO₃)₃·9H₂O | Fe₂O₃/Rh/(Zr,Ce)O₂ |
| Example 9 | Ga(NO₃)₃·nH₂O | Ga₂O₃/Rh/(Zr,Ce)O₂ |
| Example 10 | AgNO₃ | AgO/Rh/(Zr,Ce)O₂ |
| Example 11 | (NH₄)₂Mo₂O₇ | MoO2/Rh/(Zr,Ce)O₂ |
| Example 12 | 5(NH₄)₂·12WO₂·5H₂O | WO₂/Rh/(Zr,Ce)O₂ |
| Example 13 | TlNO₃ | Tl₂O₃/Rh/(Zr,Ce)O₂ |
| Example 14 | Bi(NO₃)₃·5H₂O | Bi₂O₃/Rh/(Zr,Ce)O₂ |
| Comparative Example 3 | - | Rh/(Zr,Ce)O₂ |
| Comparative Example 4 | Y(NO₃)₃·6H₂O | Y₂O₃/Rh/(Zr,Ce)O₂ |

### [Evaluation 2 of Initial Catalyst Performance]

100 Parts by mass of each of the catalysts of Examples 8 to 14 and Comparative Examples 3 and 4 were coated on a ceramic honeycomb, as per the above Evaluation 1 of Initial Catalyst Performance. The amount of rhodium in the catalyst coated on a ceramic honeycomb was adjusted to 0.5 g/L.

For the ceramic honeycombs having the catalyst of Examples 8 to 14 and Comparative Examples 3 and 4 coated thereon, the time until the HC purification percentage reached 50% was examined. The results are shown in Table 8.

**Table 8: Evaluation 2 of Initial Catalyst Performance**

| | Constitution of Catalyst | Electro-negativity | Time (sec) Until Reaching 50% Purification |
|---|---|---|---|
| Example 8 | Fe₂O₃/Rh/(Zr,Ce)O₂ | Fe (1.83) | 59 |
| Example 9 | Ga₂O₃/Rh/(Zr,Ce)O₂ | Ga (1.81) | 60 |
| Example 10 | AgO/Rh/(Zr,Ce)O₂ | Ag (1.93) | 50 |
| Example 11 | MO₂O₃/Rh/(Zr,Ce)O₂ | Mo (2.16) | 52 |
| Example 12 | WO₂/Rh/(Zr,Ce)O₂ | W (2.36) | 45 |
| Example 13 | Tl₂O₃/Rh/(Zr,Ce)O₂ | Tl (2.04) | 56 |
| Example 14 | Bi₂O₃/Rh/(Zr,Ce)O₂ | Bi (2.02) | 55 |
| Comparative Example 3 | Rh/(Zr,Ce)O₂ | - | 67 |
| Comparative Example 4 | Y₂O₃/Rh/(Zr,Ce)O₂ | Y (1.22) | 66 |

As can be understood from Table 8, in the case of the catalysts of Examples 8 to 14 of the present invention wherein an oxide of a metal having an electronegativity larger than that of zirconium (electronegativity: 1.33) mainly constituting a ceria-added zirconia powder is supported on a ceria-added zirconia powder as the catalyst support, a 50% HC purification percentage is reached in a relatively short time as compared with the catalyst of Comparative Example 3 wherein such a metal oxide is not supported, and the catalyst of Comparative Example 4 wherein an oxide of yttrium having a small electronegativity is supported. This reveals that the catalysts of Examples 8 to 14 of the present invention provide high catalytic activity from a relatively low temperature as compared with the catalysts of Comparative Examples 3 and 4.

### [Evaluation 4 of Catalyst Performance after Endurance Test]

In order to evaluate the performance of the catalyst after an endurance test, the catalysts of Examples 8 to 14 and Comparative Examples 3 and 4 were each coated on a ceramic honeycomb as in Evaluation 1 of Initial Catalyst Performance above, and then the ceramic honeycomb having the catalyst coated thereon was fired in a electric furnace at 1,000°C for 3 hours. Thereafter, the time until the HC purification percentage reached 50% was examined in the same manner as in Evaluation 1 of Initial Catalyst Performance above. The results are shown in Table 9.

**Table 9: Evaluation 4 Catalyst Performance After Endurance Test**

| | Constitution of Catalyst | Ion Radius | Melting Point | Time (sec) Until Reaching 50% Purification |
|---|---|---|---|---|
| Example 8 | Fe₂O₃/Rh/(Zr,Ce)O₂ | Fe (0.92 Å) | Fe₂O₃ (1565°C) | 93 |
| Example 9 | Ga₂O₃/Rh/(Zr,Ce)O₂ | Ga (0.76 Å) | Ga₂O₃ (1740°C or more) | 69 |
| Example 10 | AgO/Rh/(Zr,Ce)O₂ | Ag (1.29 Å) | AgO* | 72 |
| Example 11 | Mo₂O₃/Rh/(Zr,Ce)O₂ | Mo (0.73 Å) | Mo₂O₃ (795°C) | 79 |
| Example 12 | WO₂/Rh/(Zr,Ce)O₂ | W (0.74 Å) | WO₂ (1500°C or more) | 67 |
| Example 13 | Tl₂O₃/Rh/(Zr,Ce)O₂ | Tl (1.03 Å) | Ti₂O₃ (717°C) | 89 |
| Example 14 | Bi₂O₃/Rh/(Zr,Ce)O₂ | Bi (1.17 Å) | Bi₂O₃ (820°C) | 81 |
| Comparative Example 3 | Rh/(Zr,Ce)O₂ | - | - | 88 |

| | | | | |
|---|---|---|---|---|
| *Started decomposing into silver and oxygen at 100°C or more. | | | | |

As can be understood from Table 9, in the case of the catalysts of Examples 8 to 14 wherein a metal oxide having an electronegativity larger than those of zirconium mainly constituting a ceria-added zirconia powder is supported on a ceria-added zirconia powder as the catalyst support, a 50% HC purification percentage is reached in the same or relatively short time as compared with the catalyst of Comparative Example 3 wherein such a metal oxide is not supported. This reveals that the catalysts of Examples 8 to 14 of the present invention provide high catalytic activity from the similar temperature or a relatively low temperature as compared with the catalyst of Comparative Example 3.

Among the catalysts of Examples 8 to 14, a particularly excellent effect is provided by the catalysts of Examples 9 to 12 and 14 wherein a metal having an ion radius out of the range from 0.86 1 (ion radius of zirconia) to 1.16 Å (ion radius of ceria) is used as the metal having a relatively large electronegativity.

Furthermore, among these catalysts of Examples 9 to 12 and 14, a particularly excellent effect is provided by the catalysts of Examples 9 and 12 wherein gallium or tungsten of which oxide has a melting point of 1,000°C or more is used as the metal having a relatively large electronegativity, and the catalysts of Examples 10 and 12 wherein silver or tungsten of which oxide is not in the form of an oxide having an oxidation number of 3 is used as the metal having a relatively large electronegativity.

## Claims

1. An exhaust gas purifying catalyst, comprising:
a metal oxide support constituted of an oxide of a first metal, wherein said first metal is contained in the support in an amount of 10 mol% or more based on the amount of all metal elements contained in the support; and
a noble metal and an oxide of a second metal directly supported on said metal oxide support;
wherein said first metal is a combination of cerium and zirconium;
wherein said noble metal is selected from the group consisting of rhodium and platinum; **characterised in that**
said second metal is selected from the group consisting of iron, gallium, silver, molybdenum, tungsten, thallium and bismuth.

2. The exhaust gas purifying catalyst according to claim 1, wherein said second metal is selected from the group consisting of gallium, silver, molybdenum, tungsten and bismuth.

3. The exhaust gas purifying catalyst according to claim 2, wherein said second metal is selected from the group consisting of gallium and tungsten.

4. The exhaust gas purifying catalyst according to any one of claims 1 to 3, wherein said noble metal is platinum.

5. The exhaust gas purifying catalyst according to claim 4, wherein said metal oxide support is a ceria-zirconia solid solution support.

6. The exhaust gas purifying catalyst according to any one of claims 1 to 5, wherein the oxide of said second metal is present in an amount of 15 mass%, or less, based on the support.

7. The exhaust gas purifying catalyst according to any one of claims 1 to 6, wherein said exhaust gas purifying catalyst is fired in an oxygen-containing oxidative atmosphere at 650 to 850°C.

8. A process of producing an exhaust gas purifying catalyst as defined in any one of claims 1 to 6, wherein the process comprises:
impregnating a metal oxide support constituted of an oxide of a first metal with a noble metal-containing solution, and then drying and firing it, and
impregnating the metal oxide support with a second metal-containing solution, and then drying and firing it; and
wherein said first metal is a combination of cerium and zirconium, and said first metal is contained in the support in an amount of 10 mol% or more based on the amount of all metal elements contained in the support;
wherein said noble metal is selected from the group consisting of rhodium and platinum, **characterised in that**
said second metal is selected from the group consisting of iron, gallium, silver, molybdenum, tungsten, thallium and bismuth.

9. The process according to claim 8, wherein the firing is performed in an oxygen-containing oxidative atmosphere at 650 to 850°C after said noble metal and said second metal are supported on said metal oxide support.

## Patentansprüche

1. Abgasreinigungskatalysator, umfassend:
einen Metalloxidträger gebildet aus einem Oxid eines ersten Metalls, wobei das erste Metall in dem Träger in einer Menge von 10 Mol-% oder mehr, bezogen auf die Menge aller im Träger enthaltenen Metallelemente, enthalten ist, und
ein Edelmetall und ein Oxid eines zweiten Metalls, welche direkt auf dem Metalloxidträger geträgert sind,
wobei das erste Metall eine Kombination aus Cer und Zirconium ist,
wobei das Edelmetall aus der aus Rhodium und Platin bestehenden Gruppe ausgewählt ist,
**dadurch gekennzeichnet, dass**
das zweite Metall aus der aus Eisen, Gallium, Silber, Molybdän, Wolfram, Thallium und Bismut bestehenden Gruppe ausgewählt ist.

2. Abgasreinigungskatalysator nach Anspruch 1, wobei das zweite Metall aus der aus Gallium, Silber, Molybdän, Wolfram und Bismut bestehenden Gruppe ausgewählt ist.

3. Abgasreinigungskatalysator nach Anspruch 2, wobei das zweite Metall aus der aus Gallium und Wolfram bestehenden Gruppe ausgewählt ist.

4. Abgasreinigungskatalysator nach einem der Ansprüche 1 bis 3, wobei das Edelmetall Platin ist.

5. Abgasreinigungskatalysator nach Anspruch 4, wobei der Metalloxidträger ein Ceroxid-Zirconiumoxid-Mischkristallträger ist.

6. Abgasreinigungskatalysator nach einem der Ansprüche 1 bis 5, wobei das Oxid des zweiten Metalls in einer Menge von 15 Massen-% oder weniger, bezogen auf den Träger, vorhanden ist.

7. Abgasreinigungskatalysator nach einem der Ansprüche 1 bis 6, wobei der Abgasreinigungskatalysator in einer sauerstoffhaltigen oxidativen Atmosphäre bei 650 bis 850 °C gebrannt wird.

8. Verfahren zur Herstellung eines wie in einem der Ansprüche 1 bis 6 definierten Abgasreinigungskatalysators, wobei das Verfahren folgendes umfasst:
Imprägnieren eines aus einem Oxid eines ersten Metalls gebildeten Metalloxidträgers mit einer edelmetallhaltigen Lösung und dann dessen Trocknen und Brennen und
Imprägnieren des Metalloxidträgers mit einer ein zweites Metall enthaltenden Lösung und dann dessen Trocknen und Brennen und
wobei das erste Metall eine Kombination aus Cer und Zirconium ist und das erste Metall in dem Träger in einer Menge von 10 Mol-% oder mehr, bezogen auf die Menge aller im Träger enthaltenen Metallelemente, enthalten ist,
wobei das Edelmetall aus der aus Rhodium und Platin bestehenden Gruppe ausgewählt ist,
**dadurch gekennzeichnet, dass**
das zweite Metall aus der aus Eisen, Gallium, Silber, Molybdän, Wolfram, Thallium und Bismut bestehenden Gruppe ausgewählt ist.

9. Verfahren nach Anspruch 8, wobei das Brennen in einer sauerstoffhaltigen oxidativen Atmosphäre bei 650 bis 850 °C durchgeführt wird nachdem das Edelmetall und das zweite Metall auf dem Metalloxidträger geträgert wurden.

## Revendications

1. Catalyseur d'épuration des gaz d'échappement, comprenant :
un support d'oxyde métallique constitué d'un oxyde d'un premier métal, où ledit premier métal est présent dans le support en une quantité de 10 % en mole ou plus sur la base de la quantité de tous les éléments métalliques présents dans le support ; et
un métal précieux et un oxyde d'un second métal directement supporté sur ledit support d'oxyde métallique ;
dans lequel ledit premier métal est une combinaison de cérium et de zirconium,
dans lequel ledit métal précieux est choisi dans le groupe constitué par le rhodium et le platine ;
**caractérisé en ce que** ledit second métal est choisi dans le groupe constitué par le fer, le gallium, l'argent, le molybdène, le tungstène, le thallium et le bismuth.

2. Catalyseur d'épuration des gaz d'échappement selon la revendication 1, dans lequel ledit second métal est choisi dans le groupe constitué par le gallium, l'argent, le molybdène, le tungstène et le bismuth.

3. Catalyseur d'épuration des gaz d'échappement selon la revendication 2, dans lequel ledit second métal est choisi dans le groupe constitué par le gallium et le tungstène.

4. Catalyseur d'épuration des gaz d'échappement selon l'une quelconque des revendications 1 à 3, dans lequel ledit métal précieux est le platine.

5. Catalyseur d'épuration des gaz d'échappement selon la revendication 4, dans lequel ledit support d'oxyde métallique est un support en solution solide d'oxyde de cérium - oxyde de zirconium.

6. Catalyseur d'épuration des gaz d'échappement selon l'une quelconque des revendications 1 à 5, dans lequel l'oxyde dudit second métal est présent en une quantité de 15 % en poids ou moins, sur la base du support.

7. Catalyseur d'épuration des gaz d'échappement selon l'une quelconque des revendications 1 à 6, dans lequel ledit catalyseur d'épuration des gaz d'échappement est calciné dans une atmosphère oxydante contenant de l'oxygène à une température de 650 à 850 °C.

8. Procédé de production d'un catalyseur d'épuration des gaz d'échappement tel que défini selon l'une quelconque des revendications 1 à 6, ledit procédé comprenant les étapes de :
imprégnation d'un support d'oxyde métallique constitué d'un oxyde d'un premier métal avec une solution contenant un métal précieux et puis séchage et calcination de celui-ci, et
imprégnation du support d'oxyde métallique avec une solution contenant un second métal et puis séchage et calcination de celui-ci ; et
dans lequel ledit premier métal est une combinaison de cérium et de zirconium, et ledit premier métal est présent dans le support en une quantité de 10 % en mole ou plus sur la base de la quantité de tous les éléments métalliques présents dans le support ;
dans lequel ledit métal précieux est choisi dans le groupe constitué par le rhodium et le platine ;
**caractérisé en ce que** ledit second métal est choisi dans le groupe constitué par le fer, le gallium, l'argent, le molybdène, le tungstène, le thallium et le bismuth.

9. Procédé selon la revendication 8, dans lequel la calcination est réalisée dans une atmosphère oxydante contenant de l'oxygène à une température de 650 à 850 °C une fois que ledit métal précieux et ledit second métal sont supportés sur ledit support d'oxyde métallique.
